# EUROPEAN PATENT SPECIFICATION

(11) **EP 3 547 411 B1**
(45) Date of publication and mention of the grant of the patent: **09.08.2023**
(21) Application number: 18790212.7
(22) Date of filing: 09.04.2018
(51) Int. Cl.: H01M 4/134, H01M 4/1395, H01M 4/62, H01M 4/04, H01M 10/052, H01M 4/131, H01M 4/1391, H01M 4/36

(54) **NEGATIVE ELECTRODE FOR LITHIUM SECONDARY BATTERY, METHOD FOR MANUFACTURING SAME, AND LITHIUM SECONDARY BATTERY COMPRISING SAME**
NEGATIVELEKTRODE FÜR EINE LITHIUMSEKUNDÄRBATTERIE, VERFAHREN ZUR HERSTELLUNG DAVON UND LITHIUMSEKUNDÄRBATTERIE DAMIT
ÉLECTRODE NÉGATIVE POUR ACCUMULATEUR AU LITHIUM, SON PROCÉDÉ DE FABRICATION, ET ACCUMULATEUR AU LITHIUM LA COMPRENANT

(30) Priority: 25.04.2017 KR 20170052748
(43) Date of publication of application: 02.10.2019
(73) Proprietor: LG Energy Solution, Ltd., Seoul 07335 (KR)
(72) Inventor: SON, Byoungkuk, Daejeon34122 (KR); JANG, Minchul, Daejeon 34122 (KR); CHOI, Junghun, Daejeon 34122 (KR); YOUN, Suk Il, Daejeon 34122 (KR); PARK, Eunkyung, Daejeon 34122 (KR); KANG, Donghyeon, Daejeon 34122 (KR); JUNG, Bora, Daejeon 34122 (KR)
(74) Representative: Hoffmann Eitle
(86) International application number: PCT/KR2018/004123
(87) International publication number: WO 2018/199505

(56) References cited:
- WO-A1-02/061864
- WO-A1-2016/148441
- DE-A1- 10 053 733
- DE-B4- 10 053 733
- KR-A- 20040 095 851
- KR-A- 20140 028 754
- KR-A- 20150 145 046
- KR-A- 20160 037 610
- KR-A- 20160 037 610
- KR-B1- 101 625 602

## Description

### [Technical Field]

The present invention relates to a negative electrode for a lithium secondary battery, a method for preparing the same, and a lithium secondary battery including the same.

### [Background Art]

Various devices requiring batteries from portable phones, wireless home appliances to electric vehicles have been recently developed, and with the development of such devices, demands for secondary batteries have also increased. Particularly, with the trend of smaller electronic goods, secondary batteries tend to be lighter and smaller as well.

Corresponding to such a trend, lithium secondary batteries using lithium metal as an active material have recently received attention. Lithium metal has a property of low oxidation-reduction potential (-3.045 V with respect to standard hydrogen electrode) and large weight energy density (3,860 mAhg⁻¹), and has been expected as a negative electrode material of high capacity secondary batteries.

However, when using lithium metal as a battery negative electrode, the battery is generally manufactured by attaching lithium foil on a planar current collector, and since lithium explosively reacts with water and also reacts with oxygen in the atmosphere with its high reactivity as an alkali metal, there is a disadvantage in that manufacture and use are difficult under general environments. Particularly, an oxide layer such as LiOH, Li₂O and Li₂CO₃ is obtained as a result of oxidation when lithium metal is exposed to the atmosphere. When such an oxide layer is present on the surface, the oxide layer functions as an insulator film decreasing electrical conductivity, and causes a problem of an increase in the electric resistance by inhibiting smooth lithium ion migration.

For such a reason, the problem of forming a surface oxide layer caused by lithium metal reactivity has been partly improved by performing a vacuum deposition process in forming a lithium negative electrode, however, fundamental suppression of surface oxide layer formation is still impossible by the exposure to the atmosphere in a battery assembly process. In view of the above, development of a lithium metal electrode capable of resolving a lithium reactivity problem and further simplifying a process while increasing energy efficiency by using lithium metal has been required.

### [Prior Art Documents]

### [Patent Documents]

Korean Patent Publication No. 2005-0007484 "Negative electrode for lithium secondary battery, method for preparing the same, and lithium secondary battery including the same"

WO 2016/148441 A1 relates to a lithium metal oxide having a nickel oxide layer on its surface, and the use of the treated lithium oxide as a negative electrode active material in a lithium secondary battery.

DE 100 53 733 A1 relates to a method for crystallizing a lithium transition metal oxide thin film, the method comprising vapour-deposition and plasma treatment steps.

WO 02/061864 A1 relates to a lithium electrode comprising lithium or lithium alloy particles coated with a metal or metal oxide.

KR 2016-0037610 A relates to an electrode comprising a lithium metal plate having a passivation layer on one surface.

### [Disclosure]

### [Technical Problem]

As described above, a lithium secondary battery has limitations in the manufacturing process due to lithium metal reactivity, and has problems in that battery lifetime and performance decline since a contact with oxygen and moisture in the atmosphere is inevitable when assembling the battery. As a result of extensive studies in view of the above, the inventors of the present invention have found out a method capable of preventing a contact with the atmosphere occurring when assembling a battery, and have completed the present invention.

Accordingly, it is an object of the present invention to provide a negative electrode for a lithium secondary battery having a thickness of a surface oxide layer reduced by blocking contact with the atmosphere while forming a lithium electrode of a lithium secondary battery.

### [Technical Solution]

In order to achieve the above object, the present invention provides a negative electrode for a lithium secondary battery including a lithium electrode layer on at least one surface of a current collector, wherein the lithium electrode layer comprises a lithium metal layer adjoining the at least one surface of the current collector and a surface oxide layer (e.g., a native layer) having a thickness of 15 nm to 50 nm formed on the lithium metal layer.

The surface oxide layer includes a first oxide layer including Li₂O, a second oxide layer including Li₂O and LiOH, and a third oxide layer including Li₂O, LiOH and Li₂CO₃, wherein the first oxide layer has a thickness of 10 nm to 30 nm, the second oxide layer has a thickness of 4 nm to 15 nm, and the third oxide layer has a thickness of 1 nm to 5 nm.

In addition, the present invention provides a method for preparing the above-described negative electrode for a lithium secondary battery including i) preparing a release coating film; ii) forming a lithium electrode layer on the release coating film; iii) laminating the lithium electrode layer and a current collector, such that the surface of the lithium electrode without the release coating film faces the current collector; and iv) peeling off the release coating film.

The step ii) may be additionally forming an ion-conducting protective layer on the release coating film, and forming a lithium electrode on the ion-conducting protective layer.

### [Advantageous Effects]

A negative electrode for a lithium secondary battery according to the present invention is prepared while being blocked from the atmosphere through a release coating film, which is effective in reducing a thickness of a surface oxide layer by delaying the surface oxide layer formation of lithium metal caused by oxygen and moisture in the atmosphere.

### [Description of Drawings]

FIG. 1 is a sectional diagram of a lithium electrode including a surface oxide layer according to the present invention.
FIG. 2 is a sectional diagram of a negative electrode for a lithium secondary battery according to a first embodiment of the present invention.
FIG. 3 is a sectional diagram of a negative electrode for a lithium secondary battery according to a second embodiment of the present invention.

### [Best Mode]

Hereinafter, the present invention will be described in detail with reference to accompanying drawings so that those skilled in the art may readily implement the present invention. However, the present invention may be implemented in various different forms, and is not limited to the present specification.

In the drawings, parts not relevant to the descriptions are not included in order to clearly describe the present invention, and like reference numerals are used for like elements throughout the specification. In addition, sizes and relative sizes of constituents shown in the drawings are unrelated to actual scales, and may be reduced or exaggerated for clarity of the descriptions.

The present invention provides a negative electrode for a lithium secondary battery including a lithium electrode on at least one surface of a current collector, wherein, in the lithium electrode, a surface oxide layer (native layer) having a thickness of 15 nm to 50 nm is formed.

A lithium electrode prepared using common methods has a surface oxide layer of a few hundred nm produced on the surface, and even when preparing a lithium electrode using a deposition process under vacuum to prevent this, production of around 100 nm of a surface oxide layer is inevitable.

Such a surface oxide layer is produced by a lithium electrode being exposed to the air, and in the present invention, a lithium electrode being exposed to oxygen and moisture in the atmosphere is prevented before a process of laminating the lithium electrode on a copper current collector, and therefore, formation of a surface oxide layer may be minimized.

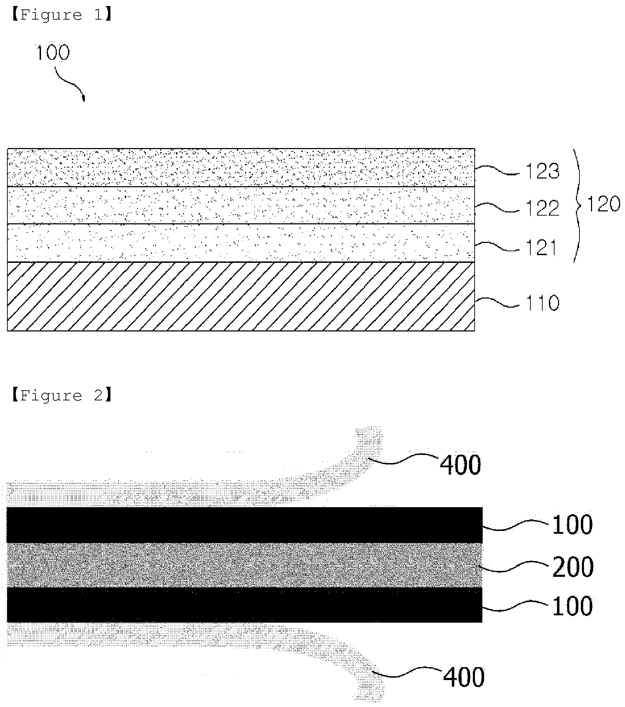

FIG. 1 is a sectional diagram of a lithium electrode including a surface oxide layer according to the present invention. When referring to FIG. 1, the surface oxide layer (120) is formed on one surface of the lithium electrode (100) not adjoining a current collector (200), and the surface oxide layer (120) of the lithium electrode (100) includes a first oxide layer (121) including Li₂O, a second oxide layer (122) including Li₂O and LiOH, and a third oxide layer (123) including Li₂O, LiOH and Li₂CO₃.

The first oxide layer (121) to the third oxide layer (123) are layers arbitrarily divided according to the oxide composition distribution rather than having their critical surfaces being present. The first oxide layer (121) to the third oxide layer (123) are formed by the depths of Li₂O, LiOH and Li₂CO₃ formed from an outermost surface of the lithium electrode (100) each varying, and depths thereof are in order of Li₂O>LiOH>Li₂CO₃.

More specifically, the distance from the outermost surface to a spot where Li₂O presents is defined as the first oxide layer (121), and the thickness is from 10 nm to 30 nm and preferably from 8 nm to 20 nm. In addition, the distance from the outermost surface layer to a spot where Li₂O and LiOH present is defined as the second oxide layer (122), and the thickness is from 4 nm to 15 nm and preferably from 3 nm to 10 nm. In addition, the distance from the outermost surface layer to a spot where Li₂O, LiOH and Li₂CO₃ present is defined as the third oxide layer (123), and the thickness is from 1 nm to 5 nm and preferably from 0.5 nm to 3 nm.

The lithium metal layer (110) is a layer remaining after forming the surface oxide layer (120) in the lithium electrode (100), and means a metal layer including a lithium metal element. The lithium metal layer includes lithium metal or a lithium alloy. As nonlimiting examples, the lithium metal layer may be a thin film of lithium metal, or an alloy of lithium and one or more types of metals selected from the group consisting of Na, K, Rb, Cs, Fr, Be, Mg, Ca, Sr, Ba, Ra, Al and Sn. Herein, the lithium metal layer (110) may be partly changed by oxygen or moisture besides the surface oxide layer (120), or may include impurities.

The thickness of the lithium electrode (100) including the lithium metal layer (110) and the surface oxide layer (120) may be from 0.02 um to 100 um, preferably from 0.05 um to 75 um and more preferably from 0.1 um to 50 um. When the thickness is less than 0.02 um, it is difficult to satisfy cycle properties due to insufficient lithium efficiency, and the thickness being greater than 100 um causes a problem of reducing energy density caused by an increase in the lithium thickness.

The negative electrode for a lithium secondary battery according to the present invention includes the lithium electrode (100) described above.

FIG. 2 is a sectional diagram of a negative electrode for a lithium secondary battery according to a first embodiment of the present invention. When referring to FIG. 2, the negative electrode for a lithium secondary battery includes the above-described lithium electrode (100) on at least one surface of a current collector (200), and includes a release coating film (400) on the lithium electrode (100). Herein, the release coating film (400) performs a role of preventing the lithium metal layer (110) from being in contact with oxygen and moisture in the atmosphere during a negative electrode preparation process, and is removed when assembling a battery later.

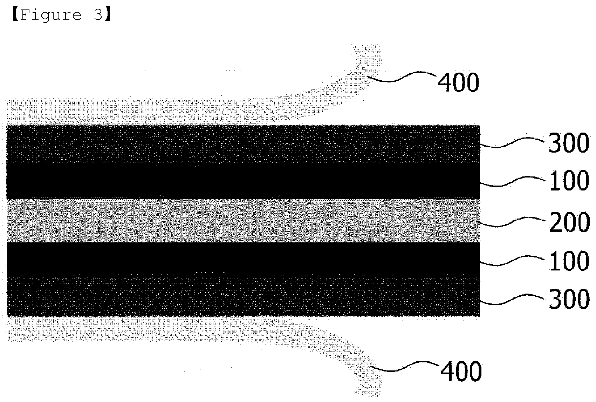

FIG. 3 is a sectional diagram of a negative electrode for a lithium secondary battery according to a second embodiment of the present invention. When referring to FIG. 3, the negative electrode for a lithium secondary battery includes the above-described lithium electrode (100) on at least one surface of a current collector (200), and further includes an ion-conducting protective layer (300) on one surface of the lithium electrode (100) not adjoining the current collector (200), and includes a release coating film (400) on the ion-conducting protective layer (300). Herein, as described above, the release coating film (400) performs a role of preventing the lithium metal layer (110) from being in contact with oxygen and moisture in the atmosphere during a negative electrode preparation process, and is removed when assembling a battery later.

As the current collector (200), all may be used as long as they are capable of being used as a current collector in the art, and specifically, the current collector (200) may be selected from the group consisting of copper, stainless steel, titanium, silver, palladium, nickel, alloys thereof and combinations thereof. The stainless steel may have its surface treated with carbon, nickel, titanium or silver, and as the alloy, aluminum-cadmium alloys may be used. In addition thereto, baked carbon, non-conducting polymers of which surface is treated with a conductor, conducting polymers or the like may also be used.

The release coating film (400) of the present invention is not particularly limited as long as it includes a coating layer, and may be a film having a lamination structure in which a coating layer is coated on at least one surface of a substrate film, and more preferably, may be a film having a lamination structure in which a coating layer is coated on both surfaces of the substrate film. When forming a coating layer on both surfaces of the substrate film, transferring of the lithium electrode (100) or the ion-conducting protective layer (300) to the other side adjoining during a film winding process after forming the lithium electrode (100) or the ion-conducting protective layer (300) on the release coating film (400) can be prevented.

The coating layer is a material having high heat resistance, and may be one or more types selected from the group consisting of silicone-based, fluorine-based and melamine-based compounds.

Examples of the silicone-based compound may include peroxide crosslinking-type silicone-based gluing agents, addition reaction-type silicone-based gluing agents, dehydrogenation reaction-type silicone-based gluing agents, wet curing-type silicone-based gluing agents or mixtures thereof, but are not limited thereto.

Examples of the fluorine-based compound may include ethylene-tetrafluoroethylene copolymers, low boiling point ethylene-tetrafluoroethylene copolymers or mixtures thereof, but are not limited thereto.

Examples of the melamine-based compound may include methylol-type melamine resins prepared through a condensation reaction of formaldehyde and a melamine monomer selected from the group consisting of one, two or more of monomethylolmelamine, dimethylolmelamine, trimethylol melamine, tetramethylolmelamine, pentamethylolmelamine and hexamethylolmelamine; ether-type melamine resins prepared through a condensation reaction of formaldehyde and a melamine monomer in which 1 to 6 substituents are substituted with an alkoxyalkyl group having 1 to 12 carbon atoms; imino-type melamine resins derived from melamine in which substituents are all hydrogen atoms; alkylated melamine resins such as methylated melamine resins or butylated melamine resins; or mixtures thereof, but are not limited thereto.

The thickness of the coating layer is from 0.01 um to 1 um, preferably from 0.05 um to 0.75 um and more preferably from 0.1 um to 0.5 um, and such a layer thickness allows proper thickness and rigidity even when the coating layer is thin, which is economical since a minimum amount required may be used.

The substrate film having the coating layer formed on at least one surface may enhance, in a fuel cell manufacturing process, dimensional stability of the release coating film (400), and particularly, may suppress elongation even when tension is loaded when manufacturing in a roll-to-roll manner. In addition, formation with materials having high heat resistance and dimensional stability is preferred in terms that high dimensional stability is maintained even when exposed to a high temperature due to a drying process or heat pressing treatment, and peel off with the lithium electrode (100) or the ion-conducting protective layer (300) is suppressed.

As examples of such a substrate film, various thermoplastic resins or thermocurable resins may be used, however, thermoplastic resins are preferred in terms of having flexibility. As the thermoplastic resin, one or more types selected from the group consisting of polyolefin, polyvinyl alcohol-based polymers, polyester, polyamide, polyimide, polycarbonate, polyphenylene ether, polyphenylene sulfide and cellulose derivatives may be used, and in terms of having an excellent balance of heat resistance and flexibility, polyester and polyimide are preferred. Particularly, those known as a heat resistance substrate film may be used, and for example, one or more types selected from the group consisting of polyethylene terephthalate (PET), polyethylene naphthalate (PEN), polyphenylene sulfide (PPS), polyetheretherketone (PEEK), polyphthalamide (PPA), polysulfone (PSU), polyethersulfone (PES) and polyetherimide (PEI) are preferably used, and polyethylene terephthalate (PET) is more preferably used.

The substrate film may be an elongated film in terms of enhancing film strength. The elongation may be monoaxial elongation, however, in terms of enhancing film strength, biaxial elongation is preferred. For example, elongation magnification is, in vertical and horizontal directions, each 1.5 times or greater, preferably from 1.5 times to 6 times, more preferably from 2 times to 5 times, and most preferably from 3 times to 4 times approximately. When the elongation magnification is too low, film strength readily tends to be insufficient.

An average thickness of the substrate film is, for example, from 10 um to 300 um, preferably from 20 um to 200 um, and more preferably from 50 um to 150 um approximately. When the substrate film thickness is greater than the above-mentioned range, flexibility is insufficient making peel off difficult, and when the thickness is less than the above-mentioned range, dimensional stability decreases.

### Method for Preparing Negative Electrode for Lithium Secondary Battery

A method for preparing a negative electrode for a lithium secondary battery for preventing formation of the surface oxide layer (native layer) as much as possible may be performed by carrying out the following steps, and the present invention provides a method for preparing a negative electrode for a lithium secondary battery according to a first embodiment and a second embodiment to describe later. Hereinafter, each step will be described in reference with FIG. 2 and FIG. 3.

### i) Preparing release coating film (400)

The release coating film (400) according to the present invention may be prepared using generally widely known methods. For example, in the structure in which a coating layer is laminated on at least one surface of the substrate film, methods such as coating, coextrusion or extrusion laminate, or heat pressing may be used, or a gluing agent or an adhesive may be provided therebetween for the lamination.

Among these, a method of coating (or casting) a solution including a coating layer resin on a substrate film, and then drying the result is preferred in terms that a thin and surface smooth coating layer is readily formed. As the coating method, known methods such as roll coating, air knife coating, blade coating, rod coating, reverse coating, bar coating, comma coating, die coating, gravure coating, a screen coating method, a spray method and a spinner method may be included. Among these methods, a blade coating method, a bar coating method, a gravure coating method and the like are widely used.

In addition, the release coating film (400) having a coating layer formed on one surface or both surfaces of the substrate film according to the present invention has a coating amount of 0.1 g/m² to 0.5 g/m², and preferably in a range of 0.1 g/m² to 0.3 g/m² after coating drying. When the coating amount is less than 0.1 g/m², the substrate film surface is not sufficiently covered causing a problem in peel-off stability of the coating layer located on the upper layer, and when the coating amount is greater than 0.5 g/m², problems such as blocking occur, and a problem of worsening adhesive strength between the substrate film and the coating layer occurs.

On the surface of the substrate film, known surface treatments or adhesion facilitating treatments may be added in order to enhance adhesion with the coating layer.

The substrate film may be dried after the coating, and although the drying herein may be natural drying, the substrate film may be heated and dried to evaporate a solvent. The drying temperature may be 50°C or higher, and for example, from 50°C to 200°C, preferably from 60°C to 150°C, and more preferably from 80°C to 120°C approximately.

### ii) Forming lithium electrode on the release coating film

According to a first embodiment of the present invention, a lithium electrode (100) may be directly formed on one surface of the prepared release coating film (400).

Alternatively, according to a second embodiment of the present invention, an ion-conducting protective layer (300) may be further formed on one surface of the prepared release coating film (400), and then a lithium electrode (100) may be formed thereon.

The lithium electrode (100) is preferably formed on the release coating film (400) or the ion-conducting protective layer (300) in a thin film form, and the method of formation is not particularly limited as long as it is a laminated or deposited process, and for example, various deposition methods such as an electron beam deposition method, an organometal chemical vapor deposition method, reactive sputtering, high frequency sputtering and magnetron sputtering may be used, and preferably, the lithium electrode (100) may be formed by vapor deposition (evaporation), or by rolling lithium foil. Each of the illustrated deposition methods is a known method, and therefore, specific descriptions thereon will not be included in the present specification.

The ion-conducting protective layer (300) is a lithium ion conducting polymer, and for example, may be formed with any one selected from the group consisting of polyethylene oxide (PEO), polyacrylonitrile (PAN), polymethyl methacrylate (PMMA), polyvinylidene fluoride (PVDF), polyvinylidene fluoride-co-hexafluoropropylene (PVDF-HFP), LiPON, Li₃N, LiₓLa₁₋ₓTiO₃ (0<x<1) and Li₂S-GeS-Ga₂S₃, or a mixture of two or more types among these, and preferably, may include one or more types selected from the group consisting of polyethylene glycol, polyethylene oxide, polypropylene oxide, polydimethylsiloxane, polyacrylonitrile, polymethyl methacrylate, polyvinyl chloride, polyvinylidene fluoride, polyvinylidene fluoride-co-hexafluoropropylene, polyethyleneimine, polyphenylene terephthalamide, polymethoxy polyethylene glycol methacrylate and poly2-methoxyethyl glycidyl ether, but is not limited thereto, and polymers having lithium ion conductivity may be used without limit.

Having a smaller thickness of the ion-conducting protective layer (300) is advantageous for battery output properties, however, the ion-conducting protective layer (300) needs to be formed to a certain thickness or greater to suppress side reactions between an electrolyte and the lithium electrode (100) formed on a current collector (200) afterward, and furthermore, to effectively block dendrite growth. In the present invention, the ion-conducting protective layer (300) may preferably have a thickness of 0.01 µm to 50 um. The ion-conducting protective layer (300) having a thickness of less than 0.01 um is not able to effectively suppress side reactions and exothermic reactions between the lithium electrode (100) and an electrolyte liquid increased under conditions such as overcharge or high temperature storage, and safety enhancement may not be obtained. When the thickness is greater than 50 um, it requires a long time for a polymer matrix in the ion-conducting protective layer (300) to be impregnated or swollen by an electrolyte liquid, and lithium ion migration decreases causing concern of declining overall battery performance. When considering the significance of improvement effects obtained by protective layer formation, the protective layer is more preferably formed to a thickness of 10 nm to 1 um.

The ion-conducting protective layer (300) may be prepared by coating or spraying an ion conducting polymer composition, a mixture of the ion conducting polymer and a solvent, on one surface of the release coating film (400), or impregnating the release coating film (400) into the ion conducting polymer composition, and then drying the result. More specifically, the ion conducting polymer composition is dispersed into a solvent to prepare slurry, and the slurry may be coated on one surface of the release coating film (400).

### iii) Laminating the lithium electrode and a current collector

A current collector (200) according to the present invention is not particularly limited as long as it has high conductivity without inducing chemical changes to a battery, and may be any one metal selected from the group consisting of copper, aluminum, stainless steel, zinc, titanium, silver, palladium, nickel, iron, chromium, alloys thereof and combinations thereof. The stainless steel may have its surface treated with carbon, nickel, titanium or silver, aluminum-cadmium alloys may be used as the alloy, and in addition thereto, baked carbon, non-conducting polymers of which surface is treated with a conductor, conducting polymers or the like may also be used. A copper thin film is generally used as the negative electrode current collector.

The current collector (200) may be generally prepared to a thickness of 3 um to 500 um, and various forms such as films, sheets, foil, nets, porous bodies, foams and non-woven fabrics may be used.

After preparing the current collector (200) and then facing the current collector (200) with the prepared lithium electrode (100), a lamination process is carried out.

The lamination process may be carried out using known methods. Such a lamination process is heating a negative electrode assembly including the lithium electrode (100) and the current collector (200), and as the heating method for this, an indirect heating method by convection and radiation may be normally used. In such a method, each manufacturing process of a secondary battery is organically connected for mass production, and it is for laminating the unit assembly during transport.

A heating temperature of the lamination is from 20°C to 150°C, preferably from 40°C to 130°C, and more preferably from 60°C to 110°C. When the temperature is lower than 20°C, it may take long to reach the lamination temperature, and when the temperature is higher than 150°C, cell performance decline may occur due to substrate film shrinkage.

### iv) Peeling off the release coating film

The release coating film (400) preferably has peel-off strength of 0.004 gf/mm to 0.8 gf/mm. More specifically, the release coating film (400) preferably has peel-off strength maintained in the above-mentioned range after heating for 30 minutes at a temperature of 150°C. In the above-mentioned range, the release coating film (400) is cleanly peeled off, and defects such as the lithium electrode (100) or the ion-conducting protective layer (300) formed on the release coating film (400) being lifted or some thereof falling apart may be reduced. Herein, the peel-off strength may be measured in reference with the ASTM D3330 measurement method using a texture analyzer.

### Lithium Secondary Battery

A positive electrode may be prepared by film-forming a composition including a positive electrode active material, a conductor and a binder on a positive electrode current collector.

The positive electrode active material may vary depending on the use of a lithium secondary battery, and as for specific compositions, known materials are used. As one example, any one lithium transition metal oxide selected from the group consisting of lithium cobalt-based oxides, lithium manganese-based oxides, lithium copper oxide, lithium nickel-based oxides and lithium manganese composite oxides and lithium-nickel-manganese-cobalt-based oxides may be included, and more specifically, lithium manganese oxides such as Li₁₊ₓMn₂₋ₓO₄ (herein, x is from 0 to 0.33), LiMnO₃, LiMn₂O₃ or LiMnO₂; lithium copper oxide (Li₂CuO₂) ; vanadium oxides such as LiV₃O₃, LiFe₃O₄, V₂O₅ or Cu₂V₂O₇; lithium nickel oxides represented by LiNi₁₋ₓMₓO₂ (herein, M=Co, Mn, Al, Cu, Fe, Mg, B or Ga, x=0.01 to 0.3); lithium manganese composite oxides represented by LiMn₂₋ₓMₓO₂ (herein, M=Co, Ni, Fe, Cr, Zn or Ta, x=0.01 to 0.1) or Li₂Mn₃MO₃ (herein, M=Fe, Co, Ni, Cu or Zn), lithium-nickel-manganese-cobalt-based oxides represented by Li(NiₐCo_{b}Mn_{c})O₂ (herein, 0<a<1, 0<b<1, 0<c<1, a+b+c=1), Fe₂(MoO₄)₃; elemental sulfur, disulfide compounds, organosulfur protective layers (organosulfur compounds) and carbon-sulfur polymers ((C₂Sₓ)ₙ: x=2.5 to 50, n=2); graphite-based materials; carbon black-based materials such as Super-P, denka black, acetylene black, ketjen black, channel black, furnace black, lamp black, thermal black or carbon black; carbon derivatives such as fullerene; conductive fibers such as carbon fibers or metal fibers; fluorinated carbon, aluminum, metal powders such as nickel powder; and conducting polymers such as polyaniline, polythiophene, polyacetylene or polypyrrole; forms having a catalyst such as Pt or Ru loaded into a porous carbon support, and the like, may be used. However, the positive electrode active material is not limited thereto.

The conductor is a component for further enhancing conductivity of the positive electrode active material, and nonlimiting examples thereof may include graphite such as natural graphite or artificial graphite; carbon black such as carbon black, acetylene black, ketjen black, channel black, furnace black, lamp black or thermal black; conductive fibers such as carbon fibers or metal fibers; fluorinated carbon, aluminum, metal powders such as nickel powder; conductive whiskers such as zinc oxide or potassium titanate; conductive metal oxides such as titanium oxide; conductive materials such as polyphenylene derivatives, and the like.

The positive electrode may further include a binder for binding of the positive electrode active material and the conductor, and for binding on the current collector. The binder may include a thermoplastic resin or a thermocurable resin. For example, polyethylene, polypropylene, polytetrafluoroethylene (PTFE), polyvinylidene fluoride (PVDF), styrene-butadiene rubber, a tetrafluoroethyleneperfluoroalkylvinyl ether copolymer, a vinylidene fluoridehexafluoropropylene copolymer, a vinylidene fluoridechlorotrifluoroethylene copolymer, an ethylene-tetrafluoroethylene copolymer, polychlorotrifluoroethylene, a vinylidene fluoride-pentafluoropropylene copolymer, a propylene-tetrafluoroethylene copolymer, an ethylenechlorotrifluoroethylene copolymer, a vinylidene fluoridehexafluoropropylene-tetrafluoroethylene copolymer, a vinylidene fluoride-perfluoromethylvinyl ethertetrafluoroethylene copolymer, an ethylene-acrylic acid copolymer and the like may be used either alone or as a mixture, however, the binder is not limited thereto, and all may be used as long as they are capable of being used as a binder in the art.

The positive electrode current collector is the same as described in the negative electrode current collector, and an aluminum thin plate may be generally used as the positive electrode current collector.

Such a positive electrode may be prepared using common methods, and specifically, may be prepared by coating a composition for forming a positive electrode active material layer prepared by mixing the positive electrode active material, the conductor and the binder in an organic solvent on the current collector and drying the result, and optionally, compression molding on the current collector for enhancing electrode density. Herein, as the organic solvent, those capable of uniformly dispersing the positive electrode active material, the binder and the conductor and readily evaporating are preferably used. Specifically, acetonitrile, methanol, ethanol, tetrahydrofuran, water, isopropyl alcohol and the like may be included.

The positive electrode composition may be coated on the positive electrode current collector using common methods known in the art, and for example, various methods such as a dipping method, a spray method, a roll coat method, a gravure printing method, a bar coat method, a die coating method, a comma coating method or a mixed method thereof may be used.

The positive electrode and the positive electrode composition that have gone through such a coating process achieves solvent or dispersion medium evaporation, compactness of the coating layer and adhesion between the coating layer and the current collector through a drying process afterward. Herein, the drying is carried out using a common method, and is not particularly limited.

A common separator may be provided between the positive electrode and the negative electrode. The separator is a physical separator having a function of physically separating electrodes, and is not particularly limited as long as it is used as a common separator, and those having an excellent electrolyte liquid moisture-containing ability while having low resistance for ion migration of the electrolyte liquid are particularly preferred.

In addition, the separator enables lithium ion transport between the positive electrode and the negative electrode while separating or insulating the positive electrode and the negative electrode from each other. Such a separator may be formed with porous non-conducting or insulating materials. The separator may be an independent member such as a film, or a coating layer added to the positive electrode and/or the negative electrode.

As examples of the polyolefin-based porous membrane, membranes formed with a polyolefin-based polymer such as polyethylene such as high density polyethylene, linear low density polyethylene, low density polyethylene and ultrahigh molecular weight polyethylene, polypropylene, polybutylene and polypentene each alone, or formed with a polymer mixing these may be included.

In addition to the polyolefin-based porous membrane described above, non-woven fabrics formed, for example, polyphenylene oxide, polyimide, polyamide, polycarbonate, polyethylene terephthalate, polyethylene naphthalate, polybutylene terephthalate, polyphenylene sulfide, polyacetal, polyether sulfone, polyetheretherketone, polyester and the like each alone, or formed with a polymer mixing these may be used, and, as a fiber form forming a porous web, such a non-woven fabric includes a spunbond or meltblown form formed with long fibers.

The thickness of the separator is not particularly limited, but is preferably in a range of 1 um to 100 um and more preferably in a range of 5 um to 50 um. When the separator has a thickness of less than 1 um, mechanical properties may not be maintained, and when the thickness is greater than 100 um, the separator functions as a resistive layer declining battery performance.

A pore size and porosity of the separator are not particularly limited, however, the pore size is preferably from 0.1 um to 50 um, and the porosity is preferably from 10% to 95%. When the separator has a pore size of less than 0.1 um or porosity of less than 10%, the separator functions as a resistive layer, and when the pore size is greater than 50 um or the porosity is greater than 95%, mechanical properties may not be maintained.

The electrolyte liquid of the lithium secondary battery is a lithium salt-containing electrolyte liquid, and may be an aqueous or non-aqueous electrolyte liquid, and preferably, a non-aqueous electrolyte formed with an organic solvent electrolyte liquid and a lithium salt. In addition thereto, an organic solid electrolyte, an inorganic solid electrolyte or the like may be included, however, the electrolyte liquid is not limited thereto.

As the lithium salt, those commonly used in electrolyte liquids for a lithium secondary battery may be used without limit. For example, an anion of the lithium salt may include any one selected from the group consisting of F⁻, Cl⁻, Br⁻, I⁻, NO₃⁻, N(CN)₂⁻, BF₄⁻, ClO₄-, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂ (CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN- and (CF₃CF₂SO₂)₂N-, or two or more types thereof.

As the organic solvent included in the non-aqueous electrolyte liquid, those commonly used in electrolyte liquids for a lithium secondary battery may be used without limit, and for example, ether, ester, amide, linear carbonate, cyclic carbonate and the like may be used either each alone, or as a mixture of two or more types. Among these, a carbonate compound that is cyclic carbonate, linear carbonate or a mixture thereof may be typically included.

Specific examples of the cyclic carbonate compound may include any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinyl ethylene carbonate and halides thereof, or a mixture of two or more types among these. Examples of the halides thereof may include fluoroethylene carbonate (FEC) and the like, but are not limited thereto.

Specific examples of the linear carbonate compound may typically include any one selected from the group consisting of dimethyl carbonate (DMC), diethyl carbonate (DEC), dipropyl carbonate, ethylmethyl carbonate (EMC), methylpropyl carbonate and ethylpropyl carbonate, or a mixture of two or more types among these, but are not limited thereto.

Particularly, among the carbonate-based organic solvents, ethylene carbonate and propylene carbonate that are cyclic carbonate are a highly viscous organic solvent and have a high dielectric constant, and therefore, may more favorably dissociate a lithium salt in an electrolyte, and when mixing and using linear carbonate having low viscosity and low dielectric constant such as dimethyl carbonate and diethyl carbonate in a proper ratio to such cyclic carbonate, an electrolyte liquid having higher electrical conductivity may be prepared.

In addition, as the ether among the organic solvents, any one selected from the group consisting of dimethyl ether, diethyl ether, dipropyl ether, methylethyl ether, methylpropyl ether and ethylpropyl ether, or a mixture of two or more types among these may be used, however, the ether is not limited thereto.

As the ester among the organic solvents, any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone and ε-caprolactone, or a mixture of two or more types among these may be used, however, the ester is not limited thereto.

The non-aqueous electrolyte liquid may be injected at a proper stage in an electrochemical device manufacturing process depending on a manufacturing process and required properties of a final product. In other words, the non-aqueous electrolyte liquid may be used at a stage prior to assembling an electrochemical device or at a final stage of electrochemical device assembly.

As one example, after preparing an electrode assembly in which the positive electrode, the separator and the negative electrode are consecutively laminated, the result is placed in a battery case, an electrolyte liquid is injected thereto, and the result is sealed with a cap plate and a gasket and assembled to manufacture a lithium secondary battery.

The lithium secondary battery according to the present invention may go through lamination (stack) and folding processes of a separator and an electrode in addition to winding, a general process. In addition, the battery case may be a cylinder-type, a square-type, a pouch-type, a coin-type or the like.

Herein, depending on the used positive electrode materials and separator types, the lithium secondary battery may be classified into various batteries such as a lithiumsulfur battery, a lithium-air battery, a lithium-oxide battery or a lithium all solid-state battery. Depending on the case shape, the lithium secondary battery may be classified into a cylinder type, a square-type, a coin-type, a pouch-type and the like, and depending on the form stored inside the case, may be a jelly-roll type, a stack type, a stack-folding type (including a stack-Z-folding type), or a lamination-stack type, for example. In addition, depending on the size, the lithium secondary battery may be classified into a bulk type and a thin-film type. Structures and manufacturing methods of these batteries are widely known in the art, and therefore, detailed descriptions thereon will not be included.

The lithium secondary battery according to the present invention may be used as a power supply of devices requiring high stability. Specific examples of the device may include power tools operated through receiving electric power by a battery motor; electric vehicles including electric vehicles (EV), hybrid electric vehicles (HEV), plug-in hybrid electric vehicles (PHEV) and the like; electric two-wheeled vehicles including e-bikes and e-scooters; electric golf carts; systems for power storage, and the like, but are not limited thereto.

Hereinafter, preferred examples will be provided in order to illuminate the present invention, however, the following examples are for illustrative purposes only, and it will be obvious to those skilled in the art that various changes and modifications may be made within the category and technological ideas of the present invention, and such changes and modifications also belong to the scope of the attached claims.

### <Example 1>

### (1) Preparation of Electrode

On both surfaces of a polyethylene terephthalate (PET) film having a thickness of 100 um, a silicone-based coating layer was coated to a thickness of 0.2 um as a coating layer using a slot die method, and then, as an ion-conducting protective layer, a polydimethylsiloxane (PDMS) material was coated to a thickness of 0.1 um on one surface using a slot die method to prepare release coating film/ion-conducting protective layer. On the ion-conducting protective layer, lithium metal was coated to a thickness of 20 um using a method of vapor deposition (evaporation) at a temperature of 550°C. The prepared release coating film/ion-conducting protective layer/lithium electrode was laminated on both surfaces of copper foil having a thickness of 8 um using a 25°C roll press to prepare an electrode.

### (2) Manufacture of Lithium Secondary Battery

A positive electrode was prepared using LiCoO₂ (LCO) as a positive electrode active material. With N-methyl pyrrolidone (NMP) as a solvent, slurry was prepared by mixing LCO:Super-P:PVDF in a weight ratio of 95:2.5:2.5, and coated on aluminum foil having a thickness of 12 um to prepare a positive electrode having a thickness of 70 um.

Using the electrode prepared in (1) as a negative electrode, polyethylene having a thickness of 20 um was provided between the positive electrode and the negative electrode as a separator, and then an electrolyte liquid including 1.0 M of LiPF₆ as a lithium salt and 2% by weight of vinylene carbonate (VC) as an additive in a solvent of ethylene carbonate (EC): diethyl carbonate (DEC): dimethyl carbonate (DMC)=1:2:1 (v/v) was injected thereto to manufacture a lithium secondary battery.

### <Example 2>

### 1) Preparation of Electrode

An electrode was prepared in the same manner as in Example 1 except that polyvinylidene fluoridehexafluoropropylene (PVDF-HFP) was coated to a thickness of 0.1 µm using a slot die method on one surface of the release coating film to form the ion-conducting protective layer.

### (2) Manufacture of Lithium Secondary Battery

A lithium secondary battery was manufactured in the same manner as in Example 1 using the above-mentioned electrode as the negative electrode.

### <Comparative Example 1>

### (1) Preparation of Electrode

An electrode was formed to a thickness of 20 um with 100 µm of lithium foil on both surfaces of 8 um copper foil through a roll press process in a dry room at room temperature.

### (2) Manufacture of Lithium Secondary Battery

A lithium secondary battery was manufactured in the same manner as in Example 1 using the above-mentioned electrode as the negative electrode.

### <Comparative Example 2>

### (1) Preparation of Electrode

An electrode was formed by coating lithium metal to a thickness of 20 um on both surfaces of 8 um copper foil using a vapor deposition (evaporation) method at a temperature of 550°C.

### (2) Manufacture of Lithium Secondary Battery

A lithium secondary battery was manufactured in the same manner as in Example 1 using the above-mentioned electrode as the negative electrode.

### <Experimental Example 1>

Thicknesses of the surface oxide layers of the lithium electrodes of Examples 1 and 2 and Comparative Examples 1 and 2 were analyzed using X-ray photoelectron spectroscopy (XPS), and the results are shown in the following Table 1.

### [Table 1]

### (Unit: nm)

| | First Oxide Layer (Li₂O) Thickness | Second Oxide Layer (Li₂O+LiOH) Thickness | Third Oxide Layer (Li₂O+LiOH+Li₂ CO₃) Thickness | Total Thickness |
|---|---|---|---|---|
| Example 1 | 15 | 5 | 2 | 22 |
| Example 2 | 13 | 4 | 2 | 19 |
| Comparative Example 1 | 100 | 40 | 20 | 160 |
| Comparative Example 2 | 50 | 20 | 8 | 78 |

When referring to Table 1, it was identified that the total thickness of the surface oxide layer was small in the order of Comparative Example 1>Comparative Example 2>Example 1>Example 2, and the first oxide layer to the third oxide layer also had the same tendency.

From the results of Table 1, it was identified that the thicknesses of the surface oxide layers of the lithium electrodes of Examples 1 and 2 blocking contact of the lithium metal with the atmosphere using the release coating film, and the first oxide layers to the third oxide layers forming the same were small.

However, it was identified that the lithium electrodes of Comparative Examples 1 and 2 having contact with the atmosphere had, compared to Examples 1 and 2, larger thicknesses for the surface oxide layers, and the first oxide layers to the third oxide layers forming the same.

### <Experimental Example 2>

Charge: rate 0.2 C, voltage 4.25 V, CC/CV (5% current cut at 1 C)
Discharge: rage 0.5 C, voltage 3 V, CC

The number of cycles when discharge capacity reached 80% compared to initial capacity of the battery was measured while repeating cycles under the above-mentioned condition, and the results are shown in the following Table 2.

**[Table 2]**

| | Number of Cycles Reaching 80% Discharge Capacity |
|---|---|
| Example 1 | 276 |
| Example 2 | 297 |
| Comparative Example 1 | 75 |
| Comparative Example 2 | 153 |

When referring to Table 2, it was identified that the lithium electrode having contact with the atmosphere being blocked using a release coating film according to the present invention had lifetime properties being enhanced by approximately 2 times to 4 times compared to Comparative Examples 1 and 2 having contact with the atmosphere. Accordingly, it was seen that the thickness of the surface oxide layer closely relates to battery lifetime properties, and battery lifetime properties were identified to be enhanced when the thickness of the surface oxide layer decreased.

### [Reference Numeral]

- 100: Lithium Electrode
- 110: Lithium Metal Layer
- 120: Surface Oxide Layer
- 121: First Oxide Layer
- 122: Second Oxide Layer
- 123: Third Oxide Layer
- 200: Current Collector
- 300: Ion-Conducting protective layer
- 400: Release Coating Film

## Claims

1. A negative electrode for a lithium secondary battery, the negative electrode comprising a lithium electrode layer on at least one surface of a current collector;
wherein the lithium electrode layer comprises a lithium metal layer adjoining the at least one surface of the current collector, and a surface oxide layer having a thickness of 15 nm to 50 nm formed on the lithium metal layer;
wherein the lithium metal layer comprises lithium metal or a lithium alloy; and
wherein the surface oxide layer comprises
a first oxide layer comprising Li₂O;
a second oxide layer comprising Li₂O and LiOH; and
a third oxide layer comprising Li₂O, LiOH and Li₂CO₃;
wherein the first oxide layer has a thickness of 10 nm to 30 nm, the second oxide layer has a thickness of 4 nm to 15 nm, and the third oxide layer has a thickness of 1 nm to 5 nm.

2. The negative electrode of Claim 1, wherein the surface oxide layer is formed on one surface of the lithium metal layer not adjoining the current collector.

3. The negative electrode of Claim 1, further comprising an ion-conducting protective layer formed on one surface of the lithium electrode layer not adjoining the current collector.

4. The negative electrode of Claim 3, wherein the ion-conducting protective layer comprises one or more types of ion conducting polymers selected from polyethylene glycol, polyethylene oxide, polypropylene oxide, polydimethylsiloxane, polyacrylonitrile, polymethyl methacrylate, polyvinyl chloride, polyvinylidene fluoride, polyvinylidene fluoride-co-hexafluoropropylene, polyethyleneimine, polyphenylene terephthalamide, polymethoxy polyethylene glycol methacrylate and poly2-methoxyethyl glycidyl ether.

5. The negative electrode of Claim 3, wherein the ion-conducting protective layer has a thickness of 0.01 um to 50 µm.

6. A method for preparing a negative electrode as defined in Claim 1, the method comprising:
i) preparing a release coating film;
ii) forming a lithium electrode layer on the release coating film;
iii) laminating the lithium electrode layer and a current collector, such that the surface of the lithium electrode layer without the release coating film faces the current collector; and
iv) peeling off the release coating film.

7. The method of Claim 6, further comprising forming an ion-conducting protective layer on the release coating film, and forming the lithium electrode layer on one surface of the ion-conducting protective layer.

8. The method of Claim 6, wherein the release coating film comprises one or more types of substrate films selected from polyethylene terephthalate, polyethylene naphthalate, polyphenylene sulfide, polyetheretherketone, polyphthalamide, polysulfone, polyethersulfone and polyetherimide.

9. The method of Claim 6, wherein the release coating film comprises a coating layer formed on at least one surface of a substrate film, wherein said coating layer comprises one or more types of highly heat resistant materials selected from silicone-based, fluorine-based and melamine-based compounds.

10. The method of Claim 9, wherein the coating layer has a thickness of 0.01 um to 1 µm.

11. The method of Claim 6, wherein the lithium electrode layer is formed by vapor deposition, or by rolling lithium foil.

12. The method of Claim 6, wherein the release coating film has a peel-off strength of 0.004 gf/mm to 0.8 gf/mm.

13. A lithium secondary battery comprising the negative electrode of any one of Claims 1 to 5.

## Patentansprüche

1. Negative Elektrode für eine Lithiumsekundärbatterie, wobei die negative Elektrode eine Lithiumelektrodenschicht auf mindestens einer Oberfläche eines Stromkollektors umfasst;
wobei die Lithiumelektrodenschicht eine an die mindestens eine Oberfläche des Stromkollektors angrenzende Lithiummetallschicht und eine auf der Lithiummetallschicht gebildete Oberflächenoxidschicht mit einer Dicke von 15 nm bis 50 nm umfasst;
wobei die Lithiummetallschicht Lithiummetall oder eine Lithiumlegierung umfasst; und
wobei die Oberflächenoxidschicht Folgendes umfasst:
eine erste Oxidschicht, die Li₂O umfasst;
eine zweite Oxidschicht, die Li₂O und LiOH umfasst; und
eine dritte Oxidschicht, die Li₂O, LiOH und Li₂CO₃ umfasst;
wobei die erste Oxidschicht eine Dicke von 10 nm bis 30 nm aufweist, die zweite Oxidschicht eine Dicke von 4 nm bis 15 nm aufweist und die dritte Oxidschicht eine Dicke von 1 nm bis 5 nm aufweist.

2. Negative Elektrode nach Anspruch 1, wobei die Oberflächenoxidschicht auf einer Oberfläche der Lithiummetallschicht gebildet ist, die nicht an den Stromkollektor angrenzt.

3. Negative Elektrode nach Anspruch 1, die ferner eine ionenleitende Schutzschicht umfasst, die auf einer Oberfläche der Lithiumelektrodenschicht gebildet ist, die nicht an den Stromkollektor angrenzt.

4. Negative Elektrode nach Anspruch 3, wobei die ionenleitende Schutzschicht eine oder mehrere Arten an ionenleitenden Polymeren umfasst, ausgewählt aus Polyethylenglykol, Polyethylenoxid, Polypropylenoxid, Polydimethylsiloxan, Polyacrylnitril, Polymethylmethacrylat, Polyvinylchlorid, Polyvinylidenfluorid, Polyvinylidenfluoridco-Hexafluorpropylen, Polyethylenimin, Polyphenylenterephthalamid, Polymethoxypolyethylenglykolmethacrylat und Poly2-Methoxyethylglycidylether.

5. Negative Elektrode nach Anspruch 3, wobei die ionenleitende Schutzschicht eine Dicke von 0,01 um bis 50 µm aufweist.

6. Verfahren zur Herstellung einer negativen Elektrode wie in Anspruch 1 definiert, wobei das Verfahren Folgendes umfasst:
i) Herstellung eines Trennschichtfilms;
ii) Ausbilden einer Lithiumelektrodenschicht auf dem Trennschichtfilm;
iii) Laminieren der Lithiumelektrodenschicht und eines Stromkollektors, so dass die Oberfläche der Lithiumelektrodenschicht ohne den Trennschichtfilm dem Stromkollektor zugewandt ist; und
iv) Abziehen des Trennschichtfilms.

7. Verfahren nach Anspruch 6, ferner umfassend das Bilden einer ionenleitenden Schutzschicht auf dem Trennschichtfilm und das Bilden der Lithiumelektrodenschicht auf einer Oberfläche der ionenleitenden Schutzschicht.

8. Verfahren nach Anspruch 6, wobei der Trennschichtfilm eine oder mehrere Arten an Substratfilmen umfasst, ausgewählt aus Polyethylenterephthalat, Polyethylennaphthalat, Polyphenylensulfid, Polyetheretherketon, Polyphthalamid, Polysulfon, Polyethersulfon und Polyetherimid.

9. Verfahren nach Anspruch 6, bei dem der Trennschichtfilm eine Deckschicht umfasst, die auf mindestens einer Oberfläche eines Substratfilms ausgebildet ist, wobei die Deckschicht eine oder mehrere Arten an hochhitzebeständigen Materialien umfasst, ausgewählt aus Verbindungen auf Silikonbasis, Fluorbasis und Melaminbasis.

10. Verfahren nach Anspruch 9, bei dem die Deckschicht eine Dicke von 0,01 µm bis 1 µm aufweist.

11. Verfahren nach Anspruch 6, bei dem die Lithiumelektrodenschicht durch Aufdampfen oder durch Walzen einer Lithiumfolie gebildet wird.

12. Verfahren nach Anspruch 6, bei dem der Trennschichtfilm eine Abziehfestigkeit von 0,004 gf/mm bis 0,8 gf/mm aufweist.

13. Lithium-Sekundärbatterie, die die negative Elektrode nach mindestens einem der Ansprüche 1 bis 5 umfasst.

## Revendications

1. Électrode négative pour un accumulateur au lithium, l'électrode négative comprenant une couche d'électrode au lithium sur au moins une surface d'un collecteur de courant ;
dans laquelle la couche d'électrode au lithium comprend une couche métallique au lithium attenante à l'au moins une surface du collecteur de courant, et une couche d'oxyde de surface présentant une épaisseur de 15 nm à 50 nm formée sur la couche métallique au lithium ;
dans laquelle la couche métallique au lithium comprend un métal au lithium ou un alliage de lithium ; et
dans laquelle la couche d'oxyde de surface comprend
une première couche d'oxyde comprenant du Li₂O ;
une deuxième couche d'oxyde comprenant du LizO et du LiOH ; et
une troisième couche d'oxyde comprenant du LizO, du LiOH et du Li₂CO₃ ;
dans laquelle la première couche d'oxyde présente une épaisseur de 10 nm à 30 nm, la deuxième couche d'oxyde présente une épaisseur de 4 nm à 15 nm et la troisième couche d'oxyde présente une épaisseur de 1 nm à 5 nm.

2. Électrode négative selon la revendication 1, dans laquelle la couche d'oxyde de surface est formée sur une surface de la couche métallique au lithium non attenante au collecteur de courant.

3. Électrode négative selon la revendication 1, comprenant en outre une couche de protection conductrice d'ions formée sur une surface de la couche d'électrode au lithium non attenante au collecteur de courant.

4. Électrode négative selon la revendication 3, dans laquelle la couche de protection conductrice d'ions comprend un ou plusieurs types de polymères conducteurs d'ions sélectionnés parmi le polyéthylène glycol, l'oxyde de polyéthylène, l'oxyde de polypropylène, le polydiméthylsiloxane, le polyacrylonitrile, le méthacrylate de polyméthyle, le polychlorure de vinyle, le fluorure de polyvinylidène, le fluorure de polyvinylidène-co-hexafluoropropylène, le polyéthylèneimine, le polyphénylène téréphtalamide, le polyméthoxy polyéthylène glycol méthacrylate et l'éther glycidyle poly2-méthoxyéthyle.

5. Électrode négative selon la revendication 3, dans laquelle la couche de protection conductrice d'ions présente une épaisseur de 0,01 µm à 50 µm.

6. Procédé de préparation d'une électrode négative telle que définie dans la revendication 1, le procédé comprenant :
i) la préparation d'un film de revêtement détachable ;
ii) la formation d'une couche d'électrode au lithium sur le film de revêtement détachable ;
iii) la stratification de la couche d'électrode au lithium et d'un collecteur de courant, de telle sorte que la surface de la couche d'électrode au lithium dépourvue du film de revêtement détachable soit tournée vers le collecteur de courant ; et
iv) le décollement du film de revêtement détachable.

7. Procédé selon la revendication 6, comprenant en outre la formation d'une couche de protection conductrice d'ions sur le film de revêtement détachable, et la formation de la couche d'électrode au lithium sur une surface de la couche de protection conductrice d'ions.

8. Procédé selon la revendication 6, dans lequel le film de revêtement détachable comprend un ou plusieurs types de films de substrat sélectionnés parmi le polyéthylène téréphtalate, le polyéthylène naphtalate, le polysulfure de phénylène, le polyétheréthercétone, le polyphthalamide, le polysulfone, le polyéthersulfone et le polyétherimide.

9. Procédé selon la revendication 6, dans lequel le film de revêtement détachable comprend une couche de revêtement formée sur au moins une surface d'un film de substrat, dans lequel ladite couche de revêtement comprend un ou plusieurs types de matériaux hautement résistants à la chaleur sélectionnés parmi des composés à base de silicone, à base de fluor et à base de mélamine.

10. Procédé selon la revendication 9, dans lequel la couche de revêtement présente une épaisseur de 0,01 µm à 1 µm.

11. Procédé selon la revendication 6, dans lequel la couche d'électrode au lithium est formée par dépôt en phase vapeur, ou par laminage de feuille de lithium.

12. Procédé selon la revendication 6, dans lequel le film de revêtement détachable présente une résistance au décollement de 0,004 gf/mm à 0,8 gf/mm.

13. Accumulateur au lithium comprenant l'électrode négative selon l'une quelconque des revendications 1 à 5.
